# EUROPEAN PATENT APPLICATION

(11) **EP 1 512 484 A1**
(43) Date of publication of application: **09.03.2005**
(21) Application number: 04396057.4
(22) Date of filing: 01.09.2004
(51) Int. Cl.: B23K 20/02, B22F 7/04, B23K 20/16, B22F 3/15, C23C 24/08

(54) **Method for manufacturing roll type products**

(30) Priority: 03.09.2003 FI 20031249
(71) Applicant: Metso Powdermet Oy, 33541 Tampere (FI)
(72) Inventor: Liimatainen, Jari, Ilmari, 33300 Tampere (FI)
(74) Representative: Langenskiöld, Tord Karl Walter

(57) **Abstract**

A method for manufacturing cylinder-like products, wherein pipe billets or pipe billet segments are fabricated of solid material and a layer of one solid material or of a plurality of solid materials, of powder material or of a combination thereof is attached onto the inner and/or outer surface of the pipe billets or pipe billet segments by hot isostatic pressing. The pipe billets or pipe billets segments may also by welded together by hot isostatic pressing.

## Description

The method is related to manufacturing cylinder-like products like rolls and cylinders. More precisely, the present invention is related to utilizing powder metallurgy and hot isostatic pressing for manufacturing of these products.

### Background of the Invention

Ever growing requirements are imposed on cylinder-like products of paper, cardboard and tissue paper manufacturing machines like suction rolls and calender rolls on the subject of strength, fatigue durability, wear resistance and dimensional accuracy. By using traditional fabricating techniques, however, it is not possible to reach the desired properties, but new fabricating techniques and for instance coating must be used in order to reach the desired performance.

It is well known in the art to produce high-class components having almost the final dimensions by means of powder metallurgic manufacturing methods by using hot-isostatic pressing. The method thereby comprises typically the following main manufacturing steps:
1. Manufacturing a gas-atomized powder.
2. Designing and manufacturing a sheet metal capsule by means of sheet metal forming, cutting and welding techniques.
3. Filling the capsule with the powder.
4. Evacuation of the capsule.
5. Sealing of the capsule.
6. Hot-isostatic pressing by means of temperature and pressure (e.g. for steels typically T 1100 - 1200 C, pressure 100 - 120 MPa and time 1 - 4 h).
7. Machining, heat treatment and inspection.

In the method described above, the capsule die is manufactured as over-sized, in order to take into account the volumetric change of the encapsulated powder when the gas-atomized powder is consolidated. Typically, in case of a gas-atomized powder, the density is 60-70 % of the theoretical density, in other words, the capsule can contract significantly when the powder is consolidated into the density of 100 %. Control of the dimensional changes taking place, when the powder is consolidated, is essential for achieving the dimensional accuracy of the products, and naturally it has an essential influence on the production costs due to the amount of tooling allowances and the need for machining.

One special feature related to the rolls is the fact, that many of the requirements are mainly related to the surface of the rolls; for instance the corrosion fatigue durability, wear resistance, thermal fatigue durability and other thermal characteristics are mainly surface properties. Consequently, in many applications traditionally manufactured, cheaper material can be used in the body, and material with better performances, like surface course or powder-metallurgic material, can be used solely in the critical surface portions of the roll.

Another significant special feature is that the rolls to be manufactured must be assembled by welding, because the length of the components manufactured by means of special methods like hot-isostatic pressing and annular rolling is often limited even to less than 3 meters. If components manufactured by means of traditional methods like rolling, forging or casting should be used for manufacturing roll components, a problem would arise from the worse weldability of these basic materials. This results from the separation of the blend components caused by segregation, which cannot be dressed out even with working. Working can in certain cases even make the problems worse, for instance caused by the formation of plate-like structures that are dangerous from the point of view of the weldability. For instance in the quenched and tempered steels and carbon steels the formation of high-carbon areas especially in chrome, molybdenum and nickel alloyed materials causes formation of very hard areas detrimental from the point of view of the cold cracking.

### Brief description of the Invention

In the method in accordance with the invention, the roll is manufactured by using basic materials fabricated traditionally by casting, forging and/or rolling and by using hot-isostatic pressing for achieving the desired surface properties. The hot-isostatic pressing is used, in addition, for producing material layers that are more easily weldable to be formed to the weld joint surfaces of the components, by attaching a powder metallurgical layer to the weldable end by hot-isostatic pressing, or by attaching by hot-isostatic pressing material that is consolidated in advance (either made of powder or traditionally by rolling, forging or casting). If for instance material worked with hot working with a higher degree of deformation is attached to the weldable end, whereupon most of the segregation layers have been eliminated, welding problems can be reduced. If solid material is attached to the weldable ends, it may be advantageous to use powder between the solid basic material and the better weldable material to be attached, said powder, when consolidated, providing a better joint due to the stronger plastic deformation of the joint surface.

In connection with hot isostatic pressing also smaller basic billet elements can be joined together for manufacturing pipe billets. The joint can be made for instance so that between the pipe billet segments, onto the joint surface, an area is encapsulated, which is evacuated, thus forming a joint in connection with the hot isostatic pressing. The area to be encapsulated can also be filled with powder, which improves the formation of the joint as described above.

More precisely, the method in accordance with the invention is characterized in by what has been stated in the characterizing part of Claim 1.

### Detailed description of the Invention

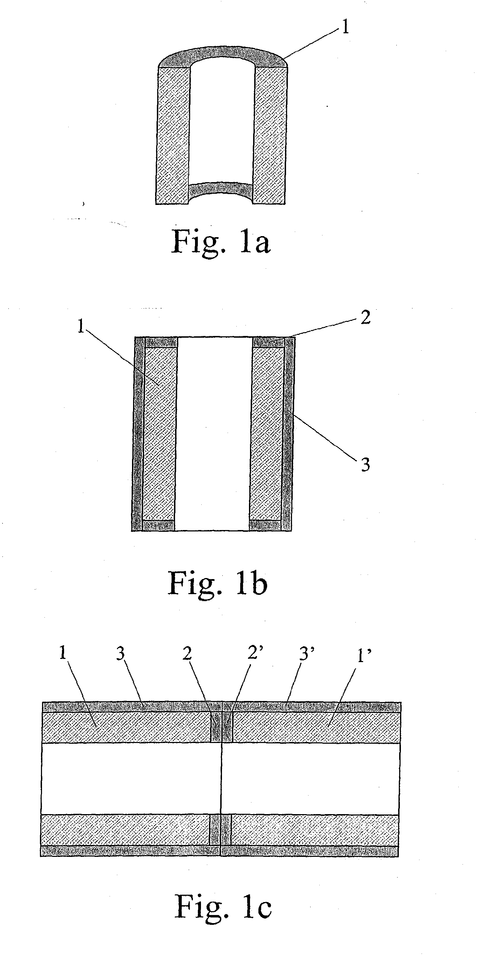

The invention will be described in more detail in the following, with reference to the enclosed drawings, in which
Figures 1a - 1c show an example of the manufacturing method in accordance with the invention.

Figure 1a shows a basic billet 1 for manufacturing roll billets, said basic billet 1 being manufactured by a conventional manufacturing method such as forging, rolling or casting and in this case having a form of a partial circular segment. The form of the basic billets can also be a solid ring or a bent ring, where only the joint for connecting the bent parts is missing.

Figure 1b shows a roll billet ready for tooling, wherein material 3 for facilitating the tooling of the surface and/or for improving the surface quality has been added to the outer surface of the cylinder surface of the basic billet 1, and better weldable material 2 compared with the material of the basic billet 1 has been added to the end surfaces of the cylinder.

For joining the materials 2 and 3 to the surfaces of the basic billet 1, suitable capsules are manufactured first to the areas, where the materials will be added. After that, the capsules are filled with the desired materials according to the requirements of the final product, either as powder or as solid material or as a mixture of those. Then the capsules on the surface of the basic billet are evacuated, either all together or separately, and a hot isostatic pressing is performed, whereby the materials are joined together.

Admixing of material in the way described above can be used e.g. on the outer and inner surfaces and weldable ends of an article, and for joining together partial segments of pipe billets.

Figure 1c shows the joining together of the roll billets described in figure 1b. Thereby materials improving the weldability of the joint surfaces of the roll have been added to the joint surfaces of the components. When joining, the roll billets are welded at the added material together for forming a uniform structure. The roll formed in this way is ready for required finishing like machining, drilling, heat treatments and inspections.

The following advantages, among others, can be achieved by the method of the invention:
(a) By using the method in accordance with the invention, the amount of powder to be used for the manufacturing, as well as production costs of the product can be decreased, compared with a product manufactured of the powder alone.
(b) Components manufactured by the method in accordance with the invention can be manufactured closer to the final dimensions, because the total contraction is smaller.
(c) The properties of the product correspond with the properties of a product manufactured by powder metallurgy, because powder metallurgic materials are used in all areas critical with respect to the operating conditions, especially in the surfaces.
(d) By means of the method in accordance with the invention, special materials can be joined, joining of which would be especially difficult without a layer to be attached to the weldable end separately by means of hot isostatic pressing.
(e) Properties of the basic materials can be improved, especially in case of castings, because their pores are closed in connection with hot isostatic pressing.

## Claims

1. Method for manufacturing roll billets, **characterized in, that**
- pipe billets or pipe billet segments are manufactured of solid materials, and
- a layer of one solid material or a plurality of solid materials, of powder material or of a combination thereof is attached to the inner and/or outer surface of the pipe billet or the pipe billet segment by means of hot isostatic pressing.

2. Method in accordance with claim 1, **characterized in, that** a layer of one solid material or a plurality of solid materials, of powder material or of a combination thereof is attached to the joint surfaces of the pipe billet or the pipe billet segments by means of hot isostatic pressing.

3. Method in accordance with claim 1 or 2, **characterized in, that** the pipe billets or pipe billet segments are joined together with one solid material or with a plurality of solid materials, with a powder material or with a combination thereof by means of hot isostatic pressing.

4. Method in accordance with claim 2 or 3, **characterized in, that** the joints to be achieved by means of hot isostatic pressing are implemented in one and the same hot isostatic pressing.

5. Method in accordance with any of the claims from 1 to 4, **characterized in, that** the pipe billets or the pipe billet segments are manufactured of alloy steels, wherein the portion of other blend components than iron is at least about 5 weight percentages or the content of carbon is at least about 0,2 weight percentages.

6. Method in accordance with any of the claims from 1 to 5, **characterized in, that** the manufactured product is used for rolls or cylinders of paper, cardboard and/or tissue paper industry.
